# EUROPÄISCHE PATENTSCHRIFT

(11) **EP 0 892 918 B1**
(45) Veröffentlichungstag und Bekanntmachung des Hinweises auf die Patenterteilung: **07.05.2003**
(21) Anmeldenummer: 97915287.3
(22) Anmeldetag: 13.02.1997
(51) Int. Cl.: G01L 5/00, G01M 3/36, B07C 5/34

(54) **Prüfen der Dichtheit des Verschlusses von Kleinbehältern**
Testing the tightness of closures of small containers
Test d'étanchéité de la fermeture de petits récipients

(30) Priorität: 12.04.1996 DE 19614475
(43) Veröffentlichungstag der Anmeldung: 27.01.1999
(73) Patentinhaber: ROBERT BOSCH GMBH, 70442 Stuttgart (DE)
(72) Erfinder: SCHÄFER, Alfred, D-74564 Crailsheim (DE)
(86) Internationale Anmeldenummer: DE9700274
(87) Internationale Veröffentlichungsnummer: WO97039319

(56) Entgegenhaltungen:
- US-A- 4 315 427
- US-A- 4 511 044

## Beschreibung

### Stand der Technik

Die Erfindung geht aus von einem Verfahren zum Prüfen der Dichtheit des Verschlusses von Kleinbehältern wie Vials, Carpulen oder dergleichen nach der Gattung des Anspruchs 1, wie es beispielsweise aus der US 4,511,044 bekannt geworden ist. Weiterhin betrifft die Erfindung eine Vorrichtung und eine Prüfstation zum Durchführen des erfindungsgemäßen Verfahrens.

Beim Verpacken von parentealen Pharmazeutika in Vials, Carpulen oder dergleichen Kleinbehältern ist es unumgehbar, daß der Verschluß einwandfrei dicht ist, um ein Eindringen von Luft, Unreinheiten oder Keimen zu vermeiden. Der aus einer Gummischeibe oder einem Gummistopfen und einer diese gegen den Mündungsrand des Behälters mit einer bestimmten Kraft drückenden, metallischen Bördelkappe bestehende Verschluß wird auf Hochleistungsverschließmaschinen gefertigt, auf denen die Bördelkappe mit dem Dichtungselement auf den Mündungsrand des Behälters gedrückt, und der freie Rand der vorzugsweise aus Aluminium bestehenden Bördelkappe um einen Flansch oder Wulst am Mündungsrand des Behälters gebördelt wird. Aufgrund der Andrückkraft wird das Dichtelement im Auflagebereich komprimiert, wobei eine Druckspannung erzeugt wird, die für die Dichtheit des Verschlusses maßgebend ist. Mitunter kann es vorkommen, daß in der Verschließmaschine beim Zuführen der Einzelteile des Verschlusses ein Dichtelement und/oder eine Bördelkappe verlorengeht, oder daß die Bördelung der Kappe nicht ordnungsgemäß durchgeführt wird. Bei der US 4,511,044 wird daher ein Verschließverfahren vorgeschlagen, bei der die Aufdrückkraft der Bördelkappe auf den Kleinbehälter während der Zeit des Verschließens erfasst, und mit vorgegebenen Sollwerten verglichen wird. Ist die Aufdrückkraft außerhalb vorgegebener Toleranzen eines Kraft/Zeit-Kurvenprofils, so wird auf einen nicht ordnungsgemäßen bzw. dichten Verschluß geschlossen. Das bekannte Prüfverfahren setzt einen stets gleichen zeitlichen Ablauf des Verschließvorganges voraus. Daher ist eine nach dem bekannten Prüfverfahren aufgebaute Verschließeinrichtung relativ aufwendig aufgebaut, da ansonsten Maschinentoleranzen oder sonstige Änderungen an der Verschließeinrichtung, die sich zum Beispiel in einer Verlängerung des Verschließvorganges äußern, zu einem unsicherem Prozeß führen. Alternativ dazu ist eine aufwendige Software erforderlich, um die oben genannten Störeinflüsse zu vermeiden.

Ferner ist bei der US 4,511,044 der Kraftaufnehmer in dem Bördelkopf integriert. Dadurch wird ein relativ aufwendiger Aufbau des Kraftaufnehmers erforderlich, da ansonsten durch das Verschließen Störeinflüsse, zum Beispiel Vibrationen, vom Bördelkopf auf den Kraftaufnehmer einwirken.

### Vorteile der Erfindung

Das erfindungsgemäße Verfahren zum Prüfen der Dichtheit des Verschlusses von Kleinbehältern mit den Merkmalen des Anspruchs 1 hat den Vorteil, daß die eine Aussage über die Dichtheit des Verschlusses des Behälters liefernde Dichtungskraft, mit der das nachgiebige Dichtelement auf den Mündungsrand des Behälters gedrückt wird, in einfacher Weise meßbar ist. Dies wird erfindungsgemäß dadurch erzielt, daß der Kraftverlauf über einem Verschiebeweg gemessen wird. Dieser Verschiebeweg ist vom zeitlichen Ablauf des Verschließens unabhängig. Änderungen im zeitlichen Ablauf des Verschließvorgangen haben daher keinerlei Einfluß auf die Meßgenauigkeit des Prüfverfahrens bzw. benötigen keinen zusätzlichen Prüfsoftwareaufwand.

Die Ansprüche 4, 11 betreffen eine entsprechende Vorrichtung und Prüfstation.

Weitere Vorteile und vorteilhafte Weiterbildungen des erfindungsgemäßen Verfahrens zum Prüfen der Dichtheit des Verschlusses von Kleinbehältern ergeben sich aus den Unteransprüchen und der Beschreibung.

Besonders vorteilhaft ist es, die Dichtheitsprüfung erst nach dem Verschließvorgang durchzuführen. In diesem Fall kann die Prüfeinrichtung von dem Bördelkopf der Verschließeinrichtung separat angeordnet sein, so daß sich ein besonders einfacher und übersichtlicher Aufbau ergibt.

Besonders vorteilhaft ist es darüber hinaus, mehrere Prüfeinrichtungen in einer Prüfstation zusammenzufassen, denen ein gemeinsamer Arbeitsplatzrechner zugeordnet ist. Dadurch läßt sich eine besonders hohe Leistung erzielen.

### Zeichnung

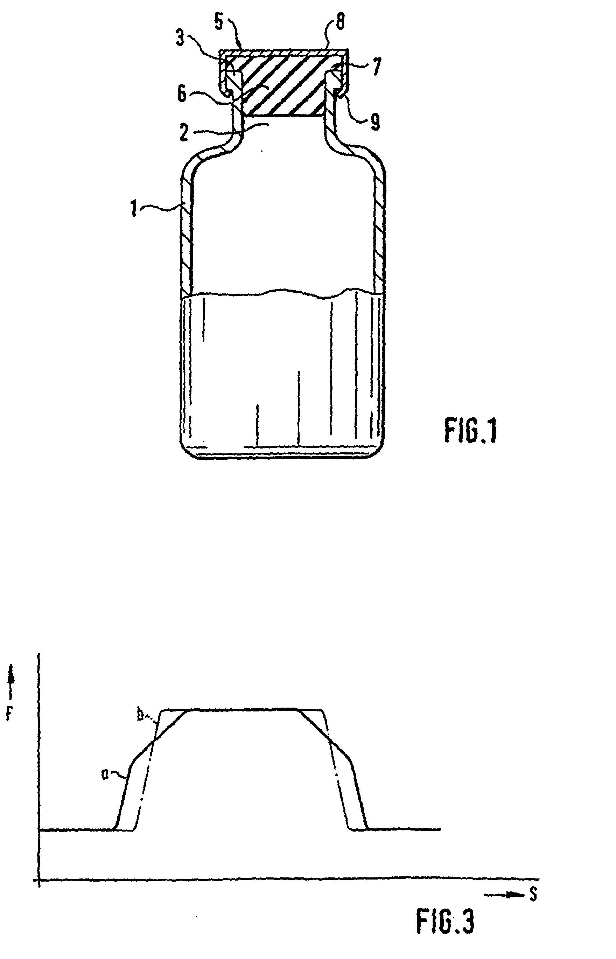

Ein Ausführungsbeispiel der Erfindung ist in der Zeichnung dargestellt, und wird in der nachfolgenden Beschreibung näher erläutert. Es zeigen Figur 1 ein Vial mit Verschluß Querschnitt, Figur 2 eine Dichtheitsprüfvorrichtung im Querschnitt, Figur 3 ein Kraft-Weg-Diagramm mit zwei Meßkurven, und Figur 4 ein Blockschaltdiagramm einer Prüfstation.

### Beschreibung des Ausführungsbeispiels

Ein Kleinbehälter für pharmazeutische Produkte, beispielsweise ein Vial 1, hat an seiner Mündung 2 einen Verschluß 5, der aus einem nachgiebigen Dichtelement, beispielsweise einem Gummistopfen 6, sowie einer Bördelkappe 8 besteht. Der Gummistopfen 6, dessen zentraler Teil in die Mündung 2 eingreift, hat einen zusätzlichen Randflansch 7, der auf dem stirnseitigen Mündungsrand 3 des Vials 1 aufliegt. Die Bördelkappe 8, die im allgemeinen aus Aluminium besteht, übergreift den Gummistopfen 6; ihr freies Ende 9 ist um einen die Mündung 2 des Vials 1 umgebenden Flansch durch Bördeln plastisch verformt. Zum Bördeln werden die Bördelkappe 8 und der Gummistopfen 6 gegen den Mündungsrand 3 des Vials gepreßt, wobei der Randflansch 7 des Gummistopfens 6 komprimiert wird, so daß nach Fertigstellen der Bördelung die Bördelkappe 8 den unter Druckspannung stehenden Randflansch 7 des Gummistopfens 6 mit einer gewissen Kraft gegen den Mündungsrand 3 des Vials 1 hält, die für die Dichtheit des Verschlusses 5 maßgebend ist, und auch als Dichtungskraft bezeichnet wird. Ergänzend wird bemerkt, daß anstelle von Gummistopfen 6 mit Randflansch 7 auch flache Gummischeiben zum Verschließen von Kleinbehältern verwendet werden können, die in gleicher Weise von einer Bördelkappe gehalten werden.

Zum Prüfen der Dichtheit des Verschlusses 5 des Vials 1 wird die Dichtungskraft ermittelt, mit welcher der Randflansch 7 des Gummistopfens 6 auf dem Mündungsrand 3 des Vials 1 aufliegt. Insbesondere wird durch senkrechtes Verpressen des Verschlusses 5 das im Verschluß 5 erzeugte Dichtungskraftprofil gemessen und mit einem vorgegebenen Profil verglichen. Bei Übereinstimmung des Meßprofils mit dem vorgegebenen Profil wird der geprüfte Verschluß 5 als "gut" bewertet - das geprüfte Vial 1 kann zur Auslieferung freigegeben werden - bei Abweichung wird der Verschluß 5 als "schlecht" eingestuft - das geprüfte Vial 1 muß ausgeschieden werden.

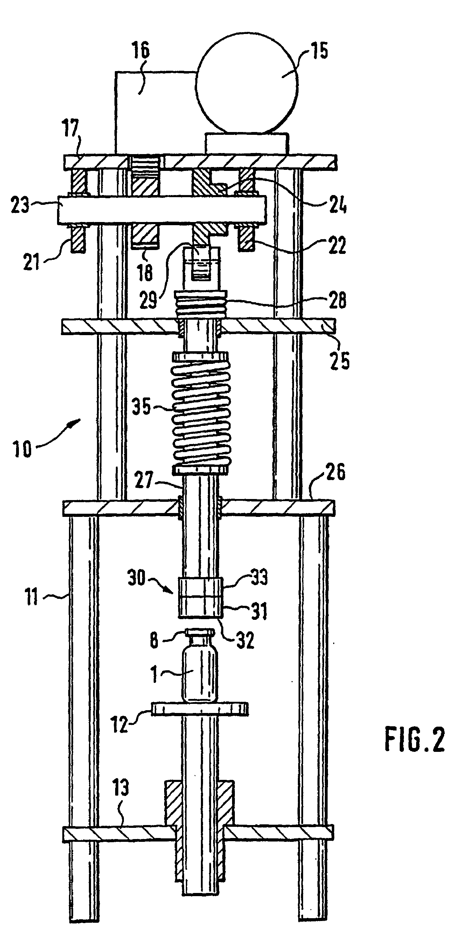

Zum Durchführen des beschriebenen Prüfverfahrens ist eine Vorrichtung 10 anwendbar, die in Figur 2 dargestellt ist. Die im wesentlichen als Exzenterpresse aufgebaute Vorrichtung 10 hat ein Säulengestell 11, in dem im unteren Teil in einem Boden ein Tisch 12 zum Einstellen auf verschiedene Größen von Vials 1 höhenverstellbar angeordnet ist. Zu oberst sitzt auf einer Deckplatte 17 ein elektrischer Antriebsmotor 15 mit einem Untersetzungsgetriebe 16, das über ein Zahnrad 18 eine in zwei Lagerböcken 21, 22 gelagerte Welle 23 periodisch antreibt. Auf dieser Welle 23 sitzt eine Exzenterscheibe 24, die eine Exzentrizität von etwa zwei Millimeter aufweist. In zwei Zwischenböden 25, 26 ist ein Stößel 27 axial verschiebbar gelagert, der am oberen Ende eine von einer Rückführfeder 28 gegen die Exzenterscheibe 24 gedrückte Rolle 29 trägt. An seinem unteren Ende hat der Stößel 27 einen Prüfkopf 30, der einen Stempel 31 mit einer ebenen Stirnseite 32 und einem Kraftsensor 33 aufweist. Ergänzend wird erwähnt, daß der Prüfkopf 30 jedoch auch in dem Tisch 12 integriert sein kann, so daß er beispielsweise eine Auflagefläche für das Vial 1 ausbildet. Der den Prüfkopf 30 tragende Stößel 27 ist unterbrochen, und die beiden Teile mit einem Federelement, beispielsweise einer vorgespannten Schraubendruckfeder 35 miteinander verbunden, deren Vorspannung eingestellt werden kann.

Die Prüfung des Verschlusses 5 eines eingangs beschriebenen Vials 1 wird folgendermaßen durchgeführt:

Das Vial 1 wird axial ausgerichtet zum Stößel 27 auf den Tisch 12 gestellt, wobei der Verschluß 5 des Vials 1 zur Stirnseite 32 des Prüfkopfs 30, der sich beim Einbringen des Vials 1 in seinem oberen Totpunkt befindet, einen Abstand von etwa ein Millimeter hat. Nach Einschalten des Antriebsmotors 15 für einen Prüfzyklus verschiebt die auf der Welle 23 sitzende Exzenterscheibe 24 den Stößel 27 entgegen der Kraft der Rückführfeder 28 nach unten. Nach Durchlaufen eines Leerhubteils, der dem Abstand zwischen Prüfkopf 30 und Bördelkappe 8 entspricht, kommt die Stirnseite 32 des Prüfkopfes 30 auf der Bördelkappe 8 des Vials 1 zur Anlage. Das Vial 1 mit dem Verschluß 5 setzt der Bewegung des Prüfkopfes 30 nun Widerstand entgegen, so daß beim weiteren Hub des Stößels 27 die vorgespannte Schraubendruckfeder 35 unter Kraftentwicklung zunehmend zusammengedrückt wird. Erreicht die aufgebrachte Kraft die Größe der Dichtungskraft, mit der die Bördelkappe 8 den Gummistopfen 6 auf den Mündungsrand 3 des Vials 1 drückt, wird der eingespannte Randflansch 7 des nachgiebigen Gummistopfens 6 weiter komprimiert, wobei der Stößel 27 mit dem Prüfkopf 30 bis zum unteren Totpunkt vorgeschoben wird. Nach dem Auftreffen des Prüfkopfes 30 auf den Verschluß 5 des Vials 1 meldet der Kraftsensor 33 des Prüfkopfes 30, der nun stillsteht und die Bewegung des Stößels 27 von der Schraubendruckfeder 35 unter Zusammendrücken dieser aufgenommen wird, einen steilen Kraftanstieg. Nach Erreichen einer Kraft, die der Dichtungskraft des Verschlusses 5 des Vials 1 entspricht und dem nun folgenden weiteren Zusammendrücken des Gummistopfens 6 flacht der Kraftanstieg beim weiteren Vorschieben des Stößels 27 und Einfederung der Schraubendruckfeder 35 durch die umlaufende Exzenterscheibe 24 bis zum unteren Totpunkt ab. Beim weiteren Umlaufen der Exzenterscheibe 24, der den abfallender Teil im Rückhub des Stößels 27 unter der Wirkung der Rückführfeder 28 steuert, erfolgt der vom Prüfkopf 30 sufganommane Kraftverlauf in umgekehrter Richtung.

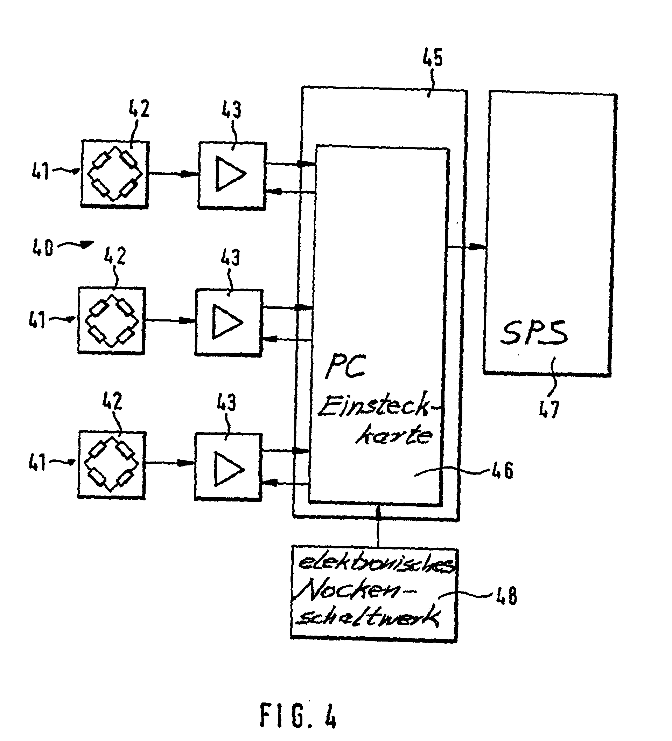

Das Meßprofil, das den beschriebenen, vom Kraftsensor 33 aufgenommenen Kraftverlauf bei einem Vial 1 mit ordnungsgemäßem Verschluß 5 hat, dient als Vergleichsgrundlage für Kraftverlaufsprofile, die bei zu prüfenden Vials 1 erzeugt werden. Das Vergleichsprofil, das durch die Kurve a in dem Diagramm nach Figur 3 dargestellt ist, zeigt auf dessen Ordinate die Kraft F und auf dessen Abszisse den von der Exzenterscheibe 24 auf den Stößel 27 ausgeübten Verschiebeweg s. Deutlich zu erkennen ist der Knick im Kraftverlauf beim Übergang des steilen Anstiegs in einen flacheren Anstieg, wobei im Knick die Kraft ausgeübt wird, die der Dichtungskraft entspricht. Der weitere Teil des Kraftverlaufs ergibt sich beim Rückhub des Stößels 27 und ist spiegelbildlich zum Kraftverlauf beim Kraftaufbau.

Bei fehlendem nachgiebigem Dichtungselement im Verschluß 5 des Vials 1 trifft der Prüfkopf 30 erst nach einem längeren Verschiebeweg auf die Bördelkappe 8. Beim Auftreffen steigt, wie die Kurve b zeigt, die Kraftentwicklung bis zum unteren Totpunkt des Stößelwegs steil an, knickt dann aber wegen fehlender Kompression des Verschlusses 1 nicht ab. Ein ähnlicher Kraftverlauf ergibt sich, wenn am Vial 1 der Verschluß 5 überhaupt fehlt. Ein solcher, vom Prüfprofil a abweichender Kraftverlauf b zeigt deutlich einen nicht ordnungsgemäßen Verschluß 5 des geprüften Vials 1 an. Nicht dargestellt ist der Kraftverlauf, der bei fehlender Bördelkappe 8 aber vorhandenem Dichtelement entsteht. In diesem Falle wird eine Kurve mit nur flachem Kraftanstieg erzeugt. Auch eine solche Kurve weicht vom Prüfprofil entscheidend ab, so daß auf einen nicht ordnungsgemäßen Verschluß geschlossen werden kann.

Ergänzend wird erwähnt, daß die in der Figur 3 dargestellten Kraftverlaufsprofile a, b rein beispielhaft sind, und je nach den besonderen geometrischen Verhältnissen von Kleinbehälter, Verschluß und Fehlerart abweichen können. Auch ist es in der Praxis denkbar, daß anhand von Grenzmustern ein Toleranzband von Kraftverlaufsprofilen a von guten Verschlüssen 5 bestimmt wird. Ein zu überprüfender Verschluß 5 wird in diesem Fall geprüft, indem kontrolliert wird, ob dessen Kraftverlaufsprofil innerhalb dieses Toleranzbandes liegt.

Zum Aufnehmen des bei jeder Prüfung entstehenden Kraftverlaufs wird vorzugsweise ein Kraftsensor 33 mit einem elektrisch wirkenden Dehnmeßstreifen verwendet, dessen Signale in einer Vergleichs- und Auswerteschaltung verarbeitet und optisch und/oder akkustisch angezeigt werden, so daß Vials 1 mit nicht ordnungsgemäßem Verschluß 5 ausgeschieden werden können.

Die Vorrichtung 10 kann anstelle von Hand auch mit einer Fördereinrichtung automatisch beschickt werden und im Gegensatz zum Ausführungsbeispiel, bei der die Vorrichtung 10 separat von einer Verschließeinrichtung zum Ausbilden des Verschlusses 5 an dem Vial 1 angeordnet ist, auch in einer Verschließmaschine für Vials 1 integral eingebaut sein. In dem letztgenannten Fall ist eine Ausschuß/Ausschubeinrichtung vorgesehen, die von der Auswerteschaltung gesteuert wird. Denkbar ist ferner, daß die beschriebene Prüfvorrichtung in der Bördeleinrichtung der Verschließmaschine integriert ist, wobei der Stößel mit dem Prüfkopf 30 das Aufdrücken der Bördelkappe 8 und des Dichtungselements 6 auf das Vial 1 beim Bördeln durchführen.

Im Gegensatz zu der beschriebenen Ausführungsform ist es auch möglich, das Vial 1 gegen einen ortsfest angeordneten Prüfkopf 30 zu verschieben.

In dem in der Figur 4 dargestellten Blockschaltbild sind die Verhältnisse bei einer erfindungsgemäßen Prüfstation 40 dargestellt, bei der 100% aller verschlossenen Vials 1 einer nicht dargestellten Abfüll- und/oder Verschließanlage auf korrekten Verschluß 5 überprüft werden. In der Prüfstation 40 sind entsprechend der Leistung der Abfüll- und/oder Verschließmaschine mehrere Vorrichtungen 41 angeordnet, deren Funktion mit der der Vorrichtung 10 vergleichbar ist. Jede Vorrichtung 41 hat einen Kraftaufnehmer 42 (entspricht Prüfkopf 30), der sein Signal an einen Meßverstärker 43 weiterleitet. Der Antrieb der Vorrichtungen 41 bzw. der Prüfstation 40 wird von der Abfüll- und/oder Verschließanlage mechanisch abgeleitet. Den Vorrichtungen 41 bzw. den Meßverstärkern 43 ist ein gemeinsamer Arbeitsplatzrechner 45 zugeordnet. Der Arbeitsplatzrechner 45 arbeitet mittels einer PC-Einsteckkarte 46. Auf der PC-Einsteckkarte 46 sind sämtliche erforderlichen Daten zur Prüfung der Kleinbehälter bzw. Vials 1 abgespeichert. Das bedeutet, daß die Prüfstation 40 nach Austausch der PC-Einsteckkarte 46 bzw. Anpassung der darauf abgespeicherten Softwaredaten an alle auf der Abfüll- und/oder Verschließanlage verarbeitbaren Kleinbehältern anpassbar ist. Die Prüfergebnisse können vom Arbeitsplatzrechner 45 statistisch ausgewertet, auf Massenspeichern gespeichert, und auf einem Drucker ausgedruckt werden. Die Ergebnisse können weiterhin einer nachfolgenden elektronischen Baugruppe 47, beispielsweise einer speicherprogrammierbaren Steuerung zugeführt werden. Die Prüfstation 40 passt sich automatisch der Taktfrequenz von übergeordneten Stationen an, wobei sich die Taktfrequenz auch während des Prüfvorgangs ändern kann. Um dies zu ermöglichen ist die Prüfstation 40 mit einem sogenannten elektronischen Nockenschaltwerk 48 der Abfüll- und/oder Verschließanlage gekoppelt.

## Patentansprüche

1. Verfahren zum Prüfen der Dichtheit des Verschlusses (5) von Kleinbehältern (1), wie Vials, Carpulen oder dergleichen, der ein nachgiebiges Verschlußelemement (6) und eine dieses gegen den Mündungsrand (3) des Kleinbehälters (1) unter Druck haltende Bördelkappe (8) aufweist, bei der die Bördelkappe (8) und der Mündungsrand (3) relativ gegeneinander mit einer Kraft (F) beaufschlagt werden, deren Gegenkraft von einem Kraftsensor (33) erfaßt, und einer Auswerteschaltung zugeführt wird, wobei aus dem Kraftverlauf (a, b) auf die Dichtheit des Verschlusses (5) geschlossen wird, **dadurch gekennzeichnet, daß** ein aus der Kraft (F) resultierender Verschiebeweg (s) eines Hubglieds (24) zur Beurteilung der Dichtheit des Verschlusses (5) dient, so daß bei einer Abweichung des ermittelten Kraftverlaufs (a, b) über dem Verschiebeweg (s) von einem vorgegebenen Kraftverlaufsprofil der Verschluß (5) des Kleinbehälters (1) als nicht ordnungsgemäß eingestuft wird.

2. Verfahren nach Anspruch 1, **dadurch gekennzeichnet, daß** der Kleinbehälter (1) nach dem Verschließen mit der Bördelkappe (8) mit der Kraft (F) beaufschlagt wird.

3. Verfahren nach Anspruch 1, **dadurch gekennzeichnet, daß** der Kleinbehälter (1) während des Verschließens mit der Bördelkappe (8) mit der Kraft (F) beaufschlagt wird.

4. Vorrichtung (10) zum Durchführen des Verfahrens nach einem der Ansprüche 1 bis 3, mit einem relativ gegen den Verschluß (5) eines Kleinbehälters (1) verschiebbaren, eine Kraft (F) ausübenden Prüfkopf (30), einem die erzeugte Gegenkraft aufnehmenden Kraftsensor (33), und einer die Signale des Kraftsensors (33) über dem Verschiebeweg (s) eines Hubgligeds (24) aufnehmenden, und mit einem vorgegebenen Kraftprofil vergleichendn Auswerteschaltung, die bei Abweichung der Eingangssignale vom vorgegebenen Kraftprofil den geprüften Kleinbehälter (1) als nicht ordnungsgemäß einstuft.

5. Vorrichtung nach Anspruch 4, **dadurch gekennzeichnet, daß** der Kraftsensor (33) mit dem Prüfkopf (30) verbunden ist, und daß der Prüfkopf (30) von dem Hubglied (24) gegen den Verschluß (5) des auf einem ortsfesten Tisch (12) aufgestellten Kleinbehälters (1) verschiebbar ist.

6. Vorrichtung nach Anspruch 4, **dadurch gekennzeichnet, daß** der Kraftsensor (33) mit dem Prüfkopf (30) verbunden ist, und daß der Kleinbehälter (1) von einem Hubglied (24) gegen den ortsfest angeordneten Prüfkopf (30) verschiebbar ist.

7. Vorrichtung nach Anspruch 5 oder 6, **dadurch gekennzeichnet, daß** der Prüfkopf (30) über ein Federelement (35) von dem Hubglied (24) betätigt wird.

8. Vorrichtung nach Anspruch 7, **dadurch gekennzeichnet, daß** das Federelement (35) eine Vorspannung hat, die verstellbar ist.

9. Vorrichtung nach einem der Ansprüche 4 bis 8, **dadurch gekennzeichnet, daß** die Vorrichtung Bestandteil einer Verschließeinrichtung ist, die einen aus einer Bördelkappe (8) und einem nachgiebigen Verschlußelement (6) bestehenden Verschluß (5) des Kleinbehälters (1) ausbildet.

10. Vorrichtung nach einem der Ansprüche 4 bis 8, **dadurch gekennzeichnet, daß** die Vorrichtung separat von einer Verschließeinrichtung angeordnet ist, die einen aus einer Bördelkappe (8) und einem nachgiebigen Verschlußelement (6) bestehenden Verschluß (5) des Kleinbehälters (1) ausbildet.

11. Prüfstation (40) mit mehreren Vorrichtungen zum Überprüfen der Dichtheit von Kleinbehältern (1) nach einem der Ansprüche 4 bis 10, **dadurch gekennzeichnet, daß** die Vorrichtungen mit einem gemeinsamen Arbeitsplatzrechner (45) verbunden sind.

12. Prüfstation nach Anspruch 11, **dadurch gekennzeichnet, daß** der Arbeitsplatzrechner (45) erste Mittel (46) zur Anpassung an verschiedene Kleinbehälter (1) aufweist.

13. Prüfstation nach Anspruch 11 oder 12, **dadurch gekennzeichnet, daß** zweite Mittel (48) zum Verändern der Taktfrequenz vorgesehen sind.

## Claims

1. Method for testing the tightness of the closure (5) of small containers (1) such as vials, carpules or the like, which has a flexible closure element (6) and a flanged cap (8) which holds the latter under pressure against the rim (3) of the mouth of the small container (1), in which the flanged cap (8) and the rim (3) of the mouth are subjected to a force (F) relative to one another, the reaction force of which is detected by a force sensor (33) and fed to an evaluation circuit, a conclusion being drawn as to the tightness of the closure (5) from the force characteristic (a, b), **characterized in that** a displacement travel (s) of a lifting member (24), resulting from the force (F), serves as a means of assessing the tightness of the closure (5), with the result that, in the event of a deviation of the force characteristic (a, b) obtained, from a predetermined force-characteristic profile over the displacement travel (s), the closure (5) of the small container (1) is classified as not up to standard.

2. Method according to Claim 1, **characterized in that** the small container (1) is subjected to the force (F) after being closed by means of the flanged cap (8).

3. Method according to Claim 1, **characterized in that** the small container (1) is subjected to the force (F) while being closed by means of the flanged cap (8).

4. Apparatus (10) for carrying out the method according to one of Claims 1 to 3, having a test head (30), which exerts a force (F) , and can be displaced relative to the closure (5) of a small container (1), a force sensor (33) which records the reaction force produced, and an evaluation circuit which receives the signals of the force sensor (33) over the displacement travel (s) of a lifting member (24), compares them with a predetermined force profile and, in the event of a deviation of the input signals from the predetermined force profile, classifies the small container (1) tested as not up to standard.

5. Apparatus according to Claim 4, **characterized in that** the force sensor (33) is connected to the test head (30) and **in that** the test head (30) can be displaced by the lifting member (24) against the closure (5) of the small container (1), which is placed on a fixed-location table (12).

6. Apparatus according to Claim 4, **characterized in that** the force sensor (33) is connected to the test head (30) and **in that** the small container (1) can be displaced by a lifting member (24) against the test head (30), which is arranged in a fixed location.

7. Apparatus according to Claim 5 or 6, **characterized in that** the test head (30) is actuated by the lifting member (24) by way of a spring element (35).

8. Apparatus according to Claim 7, **characterized in that** the spring element (35) has a preload which is adjustable.

9. Apparatus according to one of Claims 4 to 8, **characterized in that** the apparatus is part of a closing device which forms a closure (5) for the small container (1) comprising a flanged cap (8) and a flexible closure element (6).

10. Apparatus according to one of Claims 4 to 8, **characterized in that** the apparatus is arranged separately from a closing device which forms a closure (5) for the small container (1) comprising a flanged cap (8) and a flexible closure element (6).

11. Testing station (40) with a plurality of apparatuses for checking the tightness of small containers (1) in accordance with one of Claims 4 to 10, **characterized in that** the apparatuses are connected to a common workstation computer (45).

12. Testing station according to Claim 11, **characterized in that** the workstation computer (45) has first means (46) for adaptation to different small containers (1).

13. Testing station according to Claim 11 or 12, **characterized in that** second means (48) are provided for changing the clock frequency.

## Revendications

1. Procédé de contrôle de l'étanchéité de la fermeture (5) de petits récipients (1) tels que des flacons, des capsules ou des récipients analogues, comportant un élément de fermeture (6), souple et un capuchon serti (8) qui maintient celui-ci sous pression contre le bord (3) de l'embouchure du récipient de petites dimensions (1), selon lequel le capuchon serti (8) et le bord (3) de l'embouchure sont sollicités l'un par rapport à l'autre avec une force (F) dont on détecte la force antagoniste avec un capteur de force (33) pour fournir l'information à un circuit d'exploitation, et
à partir de la courbe de force (a, b) on détermine l'étanchéité de la fermeture (5),
**caractérisé en ce qu'**
une course (s) résultant de la force (F) d'un organe de translation (24) sert à juger de l'étanchéité de la fermeture (5) pour qu'en cas de déviation de la courbe de force (a, b) obtenue en fonction de la course (s) par rapport à un profil de force prédéterminé, on classe la fermeture (5) du récipient de petites dimensions (1) comme n'étant pas bonne.

2. Procédé selon la revendication 1,
**caractérisé en ce que**
l'on soumet le récipient de petites dimensions (1) après fermeture avec le capuchon serti (8) à la force (F).

3. Procédé selon la revendication 1,
**caractérisé en ce que**
pendant la fermeture avec le capuchon serti (8) on soumet le récipient de petites dimensions (1) à la force (F).

4. Dispositif (10) pour la mise en oeuvre du procédé selon l'une quelconque des revendications 1 à 3, comportant une tête de contrôle (30) exerçant par rapport à la fermeture (5) d'un récipient de petites dimensions (1), coulissant, une force (F), un capteur de force (33) captant la force antagoniste créée et un circuit d'exploitation qui reçoit les signaux du capteur de force (33) suivant la course de déplacement (s) d'un organe de soulèvement (24) et un circuit d'exploitation qui compare un profil de force prédéterminé, et qui en cas de déviation du signal d'entrée par rapport à un profil de force prédéterminé, classe le petit récipient (1) contrôlé comme n'étant pas bon.

5. Dispositif selon la revendication 4,
**caractérisé en ce que**
le capteur de force (33) est relié à la tête de contrôle (30) et cette tête de contrôle (30) peut être coulissée par l'organe de déplacement (24) contre la fermeture (5) du récipient de petites dimensions (1) placé sur une table fixe (12).

6. Dispositif selon la revendication 4,
**caractérisé en ce que**
le capteur de force (33) est relié à la tête de contrôle (30) et le récipient de petites dimensions (1) peut être coulissé par un organe de soulèvement (24) contre la tête de contrôle (30), fixe.

7. Dispositif selon l'une quelconque des revendications 5 ou 6,
**caractérisé en ce que**
la tête de contrôle (30) est actionnée par l'organe de soulèvement (24) par l'intermédiaire d'un élément de ressort (35).

8. Dispositif selon la revendication 7,
**caractérisé en ce que**
l'élément de ressort (35) a une précontrainte réglable.

9. Dispositif selon l'une quelconque des revendications 4 à 8,
**caractérisé en ce que**
le dispositif fait partie d'une installation de fermeture réalisant une fermeture (5) de récipients de petites dimensions (1), cette fermeture se composant d'un capuchon serti (8) et d'un élément de fermeture souple (6).

10. Dispositif selon l'une quelconque des revendications 4 à 8,
**caractérisé en ce que**
le dispositif est distinct d'une installation de fermeture qui réalise une fermeture (5) de récipients de petites dimensions (1), fermeture composée d'un capuchon serti (8) et d'un élément de fermeture (6) souple.

11. Poste de contrôle (40) comportant plusieurs dispositifs pour vérifier l'étanchéité de récipients de petites dimensions (1) selon l'une quelconque des revendications 4 à 10,
**caractérisé en ce que**
les dispositifs sont reliés à un calculateur de poste de travail (45) commun.

12. Poste de contrôle selon la revendication 11,
**caractérisé en ce que**
le calculateur de poste de travail (45) comporte des premiers moyens (46) pour s'adapter à différents petits récipients (1).

13. Poste de contrôle selon l'une quelconque des revendications 11 ou 12,
**caractérisé par**
des seconds moyens (48) pour modifier la fréquence d'horloge.
